# EUROPEAN PATENT APPLICATION

(11) **EP 1 170 904 A1**
(43) Date of publication of application: **09.01.2002**
(21) Application number: 00305638.9
(22) Date of filing: 04.07.2000
(51) Int. Cl.: H04L 12/56

(54) **Communications network and method for routing data packets**

(71) Applicant: LUCENT TECHNOLOGIES INC., Murray Hill, New Jersey 07974-0636 (US)
(72) Inventor: Van Everdingen, Michiel, 1411 BH Naarden (NL)
(74) Representative: Buckley, Christopher Simon Thirsk

(57) **Abstract**

A method for routing data packets through a communication network, wherein a communication network is used comprising a data layer and a transmission layer, wherein the data layer has a number of spaced routing functions between which connections can be set-up, said routing functions each being coupled to a connection function in the transmission layer.

The transmission layer connection functions include a connection matrix having a number of dynamic connections controllable by a routing function as well as a number of static connections.

## Description

This invention relates to a method for routing data packets through a communication network, as well as to a network for implementing said method.

Generally in a communication network a number of layers can be distinguished. One of said layers is the so-called data layer. In the data layer a message is broken down to suitable packets.

In this layer the packets are also provided with an address reflecting their destination. A data packet preceded by a header comprising at least a destination address as well as further information is called a datagram.

IP (Internet Protocol) is an example of a datagram network like for instance ATM and Frame Relay. IP is a connectionless best effort data communication protocol. Connectionless means that no fixed physical connection has to be maintained between the sending and receiving computers. Different portions of a communication can take different routes to the destination. Often the route of a datagram is not known in advance.

The transmission layer is the network level concerned with physical transmission of the data from network node to network node via the underlying physical layer comprising the physical connections between nodes in the network. The physical connections include for instance copper or glass fiber cables, ether connections etc. It is noted that it is not strictly necessary that a physical layer is positioned directly under the transmission layer, e.g. an SDH transmission layer may make use of an optical transmission layer (OTN).

The transmission layer may be implemented for example by SDH (Synchronous Digital Hierarchy) or its US equivalent SONET.

In the data layer routing takes place based on addresses in the datagram header. This routing function makes use of a transmission service provided by the transmission layer to transport the bits of the data packets. For example, the sending computer encodes the address for the receiving computer and its own address in the header and sends the packet out to a gateway connected to the Internet, or a similar network like for instance an ATM network, a Frame Relay network, or X.25 network etc.

The gateway sends the packet either directly to the recipient's gateway if possible or to a router which in turn may send the packet to a further router etc.

A problem is that each router in a path between the address of origin and the destination address has to process the header of all packets arriving at said router.

As data traffic (especially Internet traffic) is expanding at a very fast pace, the processing of headers takes an even increasing amount of time, even though the processing of a single header is shortened as a result of hardware developments.

Several techniques have been and are being developed in an effort to reduce the above problem. For example within the Multi Protocol Label Switching (MPLS) method a label is included in the packet, which label essentially is an abbreviation of the full destination address. The information comprised in the label suffices to allow the router to determine how to forward the packet. Because of the reduced contents of the label, faster processing is obtained.

Another idea is to dynamically set-up a path in the transmission layer between two routers on request of the data layer.

This path then is seen as a direct link between the two routers irrespective of any intermediate routers. This idea is sometimes referred to as cognitive bandwidth allocation. Examples are Lucent's Automatically Switched Optical Networks and Monterey's Wavelength Router system.

The present invention provides a method and communication network allowing easier and less time-consuming routing of datapackets through a communication network.

In accordance with the invention a method for routing datapackets through a communication network is provided, wherein a communication network is used comprising a data layer and a transmission layer, wherein the data layer provides for a number of spaced routing functions, between which network connections can be set-up, said routing functions each being communicatively coupled to at least one connection function in the transmission layer, said method being characterized by the step of providing in at least one of said connection functions a number of bundles, wherein a bundle comprises a group of network connections with a set of connection points at each end thereof, at least one set of said connection points including at least one controllable dynamic connection point in addition to at least one static connection point; and the step of providing in each routing function control means for selectively connecting said at least one controllable dynamic connection point to another controllable connection point in another bundle either in a first position in which said connection constitutes a through-connection via which traffic bypasses said routing function, or in a second position in which one controllable dynamic connection point is part of a bundle on which traffic flows to the routing function.

The invention further provides a communication network for implementing the above method, said communication network comprising a data layer and a transmission layer, wherein the data layer has a number of spaced routing functions between which connections can be set-up, said routing functions each being communicatively coupled to at least one connection function in the transmission layer, said connection function including a connection matrix providing connections between a number of connection points of said matrix, some of said connection points being connected via a network connection to other connection points in another connection function, some of said connection points being connected to said routing function, said communication network being characterized in that at least one of said connection functions in the transmission layer includes a controllable flexible connection matrix having at least dynamic controllable connection to be established between controllable dynamic connection points of at least two sets of controllable dynamic connection points; and in that at least one corresponding routing function has control means for selectively connecting said at least one dynamic controllable connection either in a first position in which said connection constitutes a through-connection bypassing said routing function, or in a second position in which traffic flows to the routing function.

An important aspect of the present invention is the fact that the transmission layer does not need to build its own database as would be necessary in the prior art bandwidth allocation methods. Further it is not necessary that all connection functions in the network connection on the transmission layer be involved in setting up a direct communication link.

The terminology used in this invention is as follows: *routers* are network elements that offer a *routing function* in the data layer. These *routing functions* make use of a *service* of the transmission layer to transport the bits of which the packets are comprised. Next to this basic transmission service, in this invention, the transmission layer offers the *routing function* the possibility to control the *connections* between a number of *connection points* within a *connection matrix*. The *connection points* that can be connected under control of this *routing function* are called *dynamic connection points.* In contrast, connection points that cannot be connected under control of this *routing function* are called *static connection points. A link* connects two *routers*. This link is called a *network connection* in the transmission layer. Information transported on a *link* can also be transported over a group of *network connections,* e.g. by means of grouping the *connection points* on both sides of the *network connections* together in so-called "virtual concatenation groups" (one group for each side). *A bundle* is a group of *network connections* with two sets (one at each end) of *connection points.* Each set of *connection* *points* in this bundle is connected to one connection matrix and has at least one *static connection point*.

The invention will now be further explained with reference to the attached drawing.

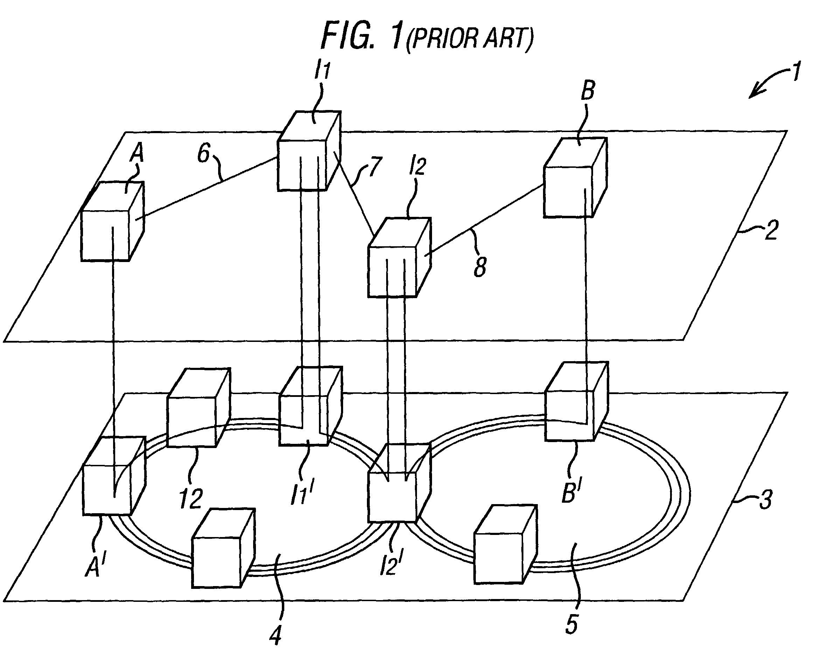

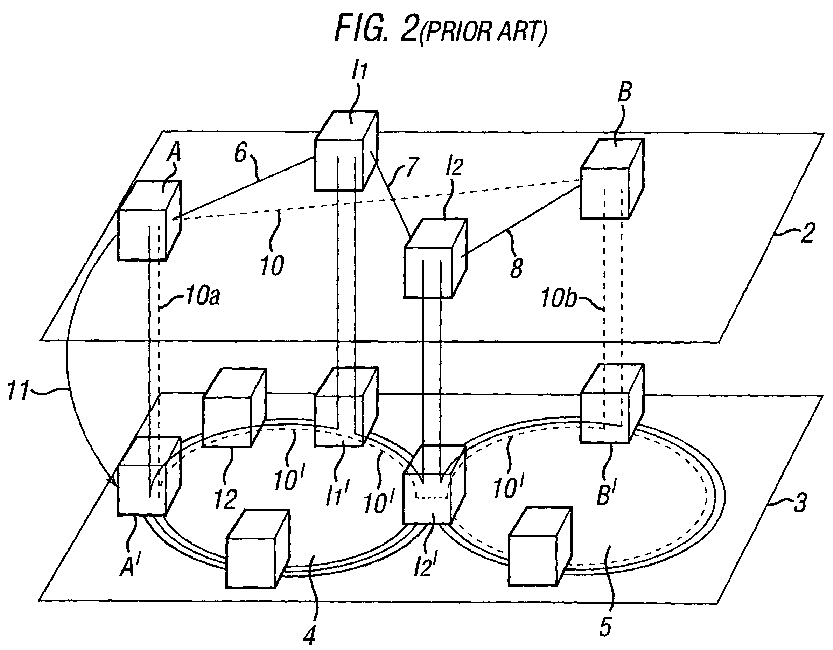

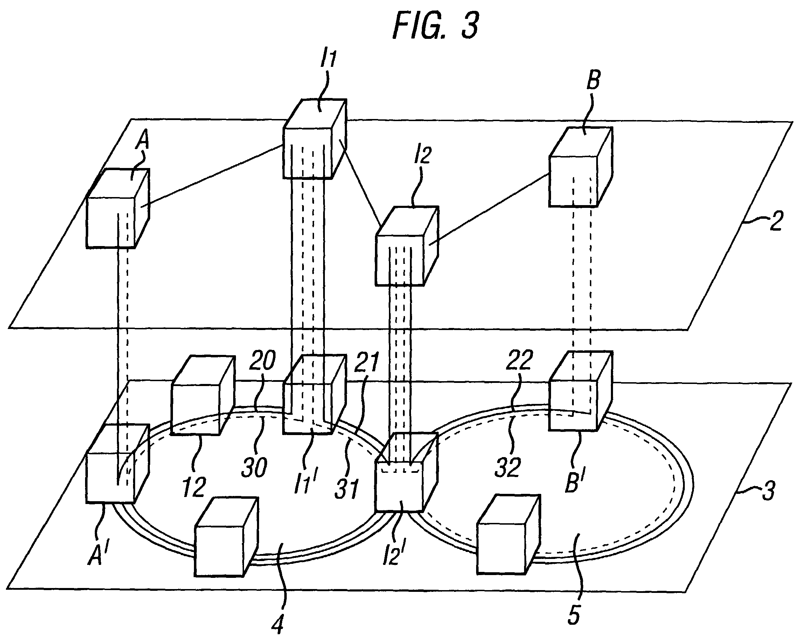

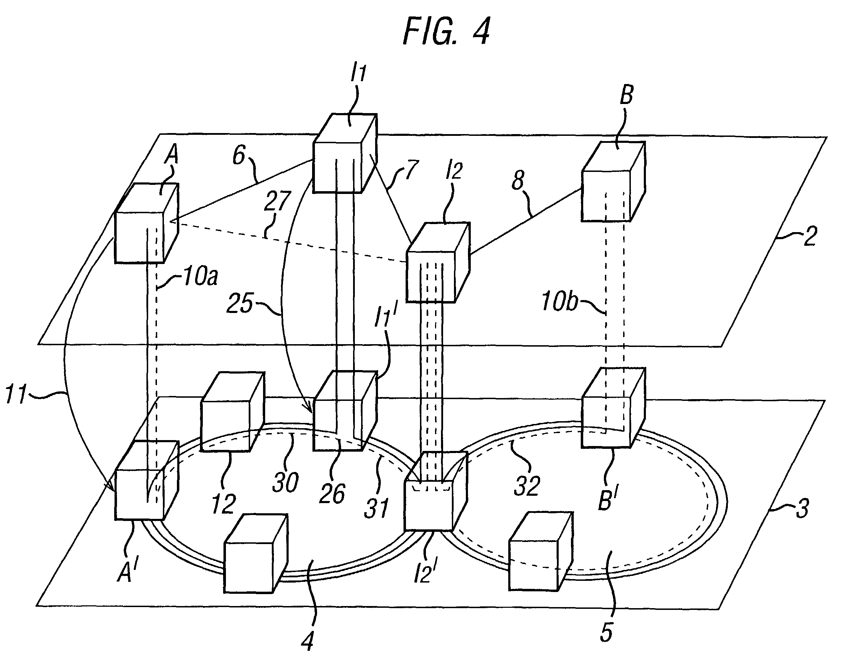

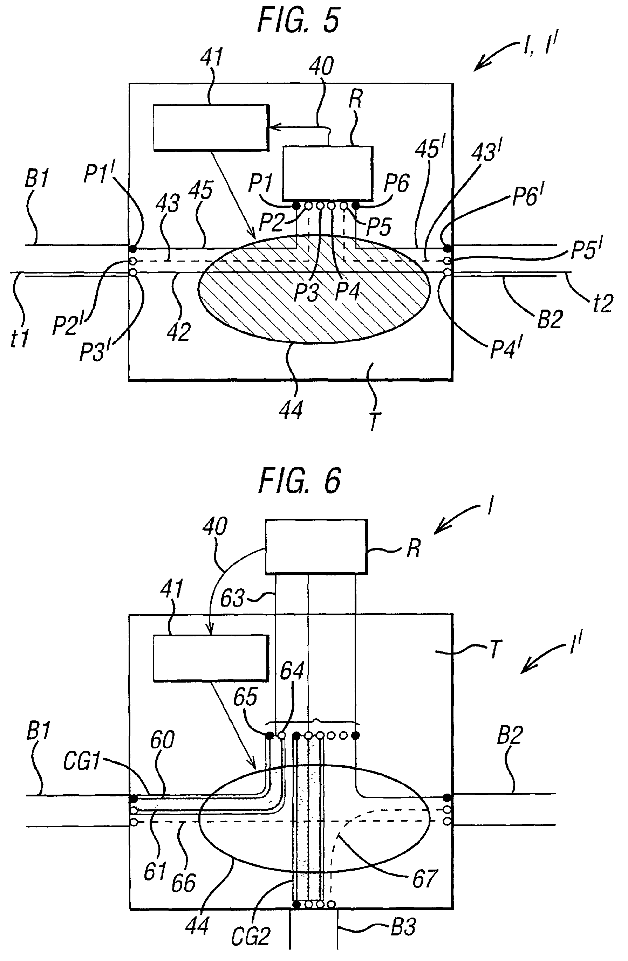

Figures 1 and 2 diagrammatically illustrate an example of a prior art datapacket routing method; figures 3 and 4 diagrammatically illustrate by way of example an embodiment of a routing method of the present invention; and figs 5 and 6 diagrammatically show examples of embodiments of a router in accordance with the present invention.

Figure 1 shows the initial situation of part of a communication network 1 prior to receipt of a request to set-up a link between routers A and B. Figure 1 shows a data layer 2 and a transmission layer 3 of a communication network. In the drawing only two rings 4, 5 have been shown in the transmission layer. In actual practice, however, much more rings and/or branches will be comprised in the network. Also the routers A and B generally will not be connected to adjacent rings.

The data layer 2 comprises routers A and B and intermediate routers I1 and I2. The routers have counterparts or nodes A', B', I1', I2' in the transmission layer 3. Routers A and B are linked through link 6, intermediate router I1, link 7, intermediate router I2 and link 8. As mentioned before, the routers are network elements in the data layer functioning to forward incoming data packets to their next destination. A link connects two routers operating in the data layer. Transport of data packets takes place over network connections in the transmission layer.

If direct communication between A and B is requested, as indicated by the dotted line 10 in figure 2, router A sends a suitable request, indicated by arrow 11, to its counterpart A' in the transmission layer. The transmission layer is required to build a map of its topology in order to be able to handle the link set-up request. The data layer may not be aware of all transmission network elements. In the drawing element 12 for instance is invisible in the data layer. In response to the set-up request 11 a direct connection is built in the transmission layer from element A' through element 12, via intermediate element I1', and intermediate element I2' to element B'. A' and B' are connected to A and B via connections 10a and 10b respectively. Similar connections to intermediate routers I1 and I2 are in fact not necessary.

In accordance with the present invention the data layer transporting the data packets can actively configure an underlying connection oriented transmission layer. More in particular at least a number of network connections are dedicated to be controlled by the data layer. Figure 3 diagrammatically shows an initial situation by way of example. Network connections 20,21,22 which cannot be controlled by the data layer 2 have been shown with full lines.

Starting from the situation of figure 3 it is supposed that a connection between routers A and B has to be set-up. In that case, router A indicates to I1 via a control packet (control message) over the static network connection that from now on, until further notice, all traffic over dashed connection 30 has router B as its destination. Router I1 after receipt of said indication received from A may decide autonomously whether the traffic may be automatically switched through on the transmission level. If so, the router I1 will send a request to I1' to make a direct through connection 26 in the connection function of I1' connecting dashed network connections 30 and 31. In similar manner router I1 can indicate to I2 that the dashed network connection 31 is only used for traffic with router B as destination. I2 may, like I1, autonomously decide to through-connect network connections 31 and 32 or to keep handling the data.

In the data layer 2 the link between A an I2 is symbolized by dashed line 27. The dashed network connections 30, 31 between routers A and I1 and routers I1 and I2 are short circuited by through-connection 26 in figure 4, forming a network connection between routers A and I2.

It is noted that between A and I1 always at least one connection, indicated by full line 20, must be present because otherwise it is not possible for the router I1 to receive control messages indicating whether A has finished sending messages over the controllable link to B and that packets on this link should be handled in router I1 again.

Thus, when a data flow enters the dynamic transmission link network, a router, for example router A, splits the data traffic. Packets controlling whether a through-connection can be established or removed must be transmitted over a static network connection between routers. The data flow proper can be transported over a dynamic network connection.

From the above it will be clear that, in accordance with the present invention, apart from the basic transmission service, the transmission layer offers one or more routers the possibility of controlling the connections between a number of connection points of a connection matrix in the nodes of the transmission layer. Examples of such flexible connection matrices have been shown in figures 5 and 6 and will be described in more detail hereunder. The controllable connections in such a matrix will be called controllable or dynamic connections and the points connectable by such dynamic connections are called controllable dynamic connection points. Connections and points that cannot be controlled by a router are called static connections and static connection points.

Information transmitted over a link between two routers will be transported in the transmission layer over a network connection with on both ends of the network connection, connection points, which can be connected with other connection points in a connection matrix. Connection points may be grouped together in a so-called virtual concatenation group to offer one data flow to the router thereby limiting the number of physical ports needed and decreasing the delay experienced by packets. A bundle is a group of network connections on which traffic flows from one connection matrix to another connection matrix. Furthermore a bundle has at least one static network connection point in both connection matrices.

The nodes in the network can include either separate transmission network elements and data network elements or hybrid network elements. Hybrid network elements do contain both data functionality and transmission functionality. Network elements A and A' or I1 and I1' etc. would in the case of hybrid elements be incorporated in a single common element wherein a request from the data layer to the transmission layer to establish or remove a direct connection is internally put through from data layer section to transmission layer section.

If the nodes in the network comprise separate network elements in the data layer and the transmission layer respectively an interface between the transmission network element and the data network element needs to be able to carry requests to set-up and break-down dynamic through-connections.

Figure 5 diagrammatically shows in a more detailed manner an embodiment of an intermediate node I, I'. The router shown as an example is a hybrid node having both routing and transmission functionality. The router has a router section R and a transmission section T.

The transmission section includes a connection matrix, diagrammatically indicated by grey area 44. The connection matrix 44 includes static connections between connection points of bundles B1, B2 and connection points of the router section R, as well as, in accordance with the present invention, dynamic connections which are controllable by the router section.

In figs 5 and 6 connection points under control of the data layer have been indicated by white dots, in the example of figure 5 those connection points are points P2-P5 and points P2'-P5'.

Connection points P1, P1' and P6, P6' are not under control of the data layer, which is indicated by the black dots.

It is noted that in principle each controllable dynamic connection point can be connected (under control of the router section) to any other controllable dynamic connection point.

Through a suitable interface represented by arrow 40 the routing function R may request a connection control section 41 implementing a transmission layer connection management function to through-connect certain controllable connection points. In figure 5 points P3', P4' have been through-connected so that a through-connection 42 is established, directly connecting a network connection t1 of bundle B1 to a network connection t2 of bundle B2. The through-connection in fact bypasses the router section R. In the situation of figure 5 traffic via connection points P2', P5' and connections 43, 43' is still handled by router section R, even though ports P2' and P5' are controllable connection points.

However, connection points P2', P5' might be through-connected to form a direct network connection. At 44 the connection matrix is diagrammatically shown. Connection points P1, P1' and P6, P6' are not under control of the data layer and consequently network connections 45, 45' are neither under control of the data layer. Static connections 45, 45' and connection points P1, P1' and P6, P6' are used for control messages but may also carry all further traffic if so desired. The dynamic connections will handle traffic excluding control messages controlling the use of any dynamic connection point. Each intermediate router in a communication path may decide to make a through-connection via a dynamic connection, for instance connection 42 in figure 5, or to keep handling both the control data and the packet flow, for instance in case of connections 43, 43' and connection points P2, P5 in figure 5.

Dynamic network connections only exist inside a dynamic transmission network between transmission functions that have the dynamic cross connect capability. Therefore, control messages (promising to send data with a specific destination on a dynamic network connection) will not be sent outside the dynamic transmission network as they have no meaning outside this dynamic transmission network.

Advantages of the present invention when compared to the prior art bandwidth allocation method are the fact that the transmission layer does not need to build its own database, and the fact that not all transmission network elements on a path need to be involved in the process of setting up a direct link.

Fig. 6 diagrammatically shows by way of example, an embodiment of an intermediate router node including a router device R and a separate transmission network element T. The transmission network element is configured having three bundles B1, B2, B3. Also a connection matrix 44 is shown. As in figure 5 the ports under control of the data layer have been indicated by small open circles, while the ports not under control of the data layer have been indicated by black dots. The static connections, which are not under control of the data layer are shown by solid lines, while the dynamic connections have been shown by dotted lines.

Apart from the fact that figure 6 does not show a hybrid network element, figure 6 also illustrates some further modifications. Said modifications, however, could be used in a hybrid element too.

First it is noted that in figure 6 the number of dynamic connection points connected to the router R is smaller than the total number of dynamic connection points in bundles B1, B2, B3. This means that at all times a number of dynamic connections will have to bypass the router.

Further figure 6 shows, by way of example, a number of concatenated connections. In figure 6 network connections 60, 61 (and thereby connection points 64, 65) from bundle B1 have been connected together into a concatenation group CG1 in order to offer a combined connection 63 to router R. It is noted that in this example connection 61 is under control of the data layer while connection 60 is not. In similar manner three network connections of bundle B3 have been concatenated in the example of figure 6.

Further, again by way of example, figure 6 shows a controllable dynamic connection 66 directly extending from bundle B 1 to bundle B2 and a further controllable connection 67 directly connecting bundle B3 and bundle B2.

It is observed that the above description and the drawing are for illustrative purposes only and are not intended to restrict the scope of the invention. Various modifications will be apparent to the skilled person. Each bundle may have any number of network connections in said bundle available for control by the data layer, and will have at least one static network connection which is not under control of the data layer. Further a routing function may be coupled to more than one transmission layer connection management function and conversely a transmission layer connection management function may be coupled to more than one routing function. Thus a router may control more than one transmission network element and one transmission network element may be coupled with more than one router.

## Claims

1. A method for routing data packets through a communication network wherein a communication network is used comprising a datalayer and a transmission layer, wherein the data layer provides for a number of spaced routing functions each being communicatively coupled to at least one connection function in the transmission layer, **characterized by** the step of providing in at least one of said connection functions a number of bundles wherein a bundle comprises a group of network connections with a set of connection points at each end thereof, at least one set of said connection points including at least one controllable dynamic connection point in addition to at least one static connection point; and the step of providing in at least one corresponding routing function control means for selectively connecting said at least one controllable dynamic connection point to another controllable connection point in another bundle either in a first position in which said connection constitutes a through-connection via which traffic bypasses said routing function, or in a second position in which one controllable dynamic connection point is part of a bundle on which traffic flows to the routing function.

2. A method as claimed in claim 1, wherein at least one hybrid network element is used, said hybrid element comprising a router section having data layer functionality and a flexible connection matrix section.

3. A communication network arranged for implementing the method of claim 1 or claim 2, said communication network comprising a data layer and a transmission layer, wherein the data layer has a number of spaced routing functions between which connections can be set-up, said routing functions each being communicatively coupled to at least one connection function in the transmission layer, said connection function including a connection matrix providing connections between a number of connection points of said matrix, some of said connection points being connected via a network connection to other connection points in another connection function, some of said connection points being connected to said routing function **characterized in that** at least one of said connection functions in the transmission layer includes a controllable flexible connection matrix having at least dynamic controllable connection to be established between controllable dynamic connection points of at least two sets of controllable dynamic connection points; and **in that** at least one corresponding routing function has control means for selectively connecting said at least one dynamic controllable connection either in a first position in which said connection constitutes a through-connection bypassing said routing function, or in a second position in which traffic flows to the routing function.

4. A communication network as claimed in claim 3, wherein said routing function and said connection function are connected by at least one static connection for control messages.

5. A communication network as claimed in claim 3 or claim 4 including at least one hybrid network element having both data functionality and transmission functionally.

6. A communication network as claimed in any one of claims 3-5 wherein said controllable flexible connection matrix has a plurality of sets of connection points connected to a network connection and at least one further set of connection points connected to a router device, wherein between each of said plurality of sets of connection points and said at least one further set of connection points at least one static connection is provided.

7. A hybrid network element for use in a method as claimed in claim 2 and/or a communication network as claimed in claim 5, said network element including a router section having data layer functionality and a flexible connection matrix section having a number of connection points connecting to either another connection matrix or to a router device.

8. A controllable flexible connection matrix suitable for use in a method as claimed in claim 1 or claim 2 and/or in a communication network as claimed in any one of claims 3-6 and/or in a network element as claimed in claim 7.
